# EUROPEAN PATENT APPLICATION

(11) **EP 2 538 518 A1**
(43) Date of publication of application: **26.12.2012**
(21) Application number: 11744826.6
(22) Date of filing: 18.02.2011
(51) Int. Cl.: H02J 7/00, B60L 11/18, H01M 2/10, H01M 10/44

(54) **QUICK CHARGING DEVICE AND MOBILE CHARGING APPARATUS**

(30) Priority: 19.02.2010 JP 2010034805
(71) Applicant: JFE Engineering Corporation, Tokyo 100-0005 (JP)
(72) Inventor: ISHIKAWA, Hirofumi, Yokohama-shi Kanagawa 230-8611 (JP); TAMURA, Atsushi, Yokohama-shi Kanagawa 230-8611 (JP); SHIMAMURA, Takahiro, Yokohama-shi Kanagawa 230-8611 (JP); IMAIZUMI, Masato, Yokohama-shi Kanagawa 230-8611 (JP); IMAI, Takashi, Kyoto-shi Kyoto 604-0857 (JP)
(74) Representative: HOFFMANN EITLE
(86) International application number: PCT/JP2011/054203
(87) International publication number: WO 2011/102543

(57) **Abstract**

The present invention provides a quick charging device that facilitates the control operation to be performed to charge a battery for power of an electric vehicle, and can achieve a small size and restrain increases in costs even if quick charging batteries are used. A quick charging device 10 includes: first and second quick charging batteries 12, 13 that are capable of quickly charging a battery for power 20; a high-capacity battery 14 that has a higher electrical capacitance than the first and second quick charging batteries 12, 13; and a controller 16. When the battery for power 20 is charged, the controller 16 connects the first quick charging battery 12 and the high-capacity battery 14 in series, and adds the power of the high-capacity battery 14 to the power of the first quick charging battery 12 before outputting the resultant power. When the electrical capacitance of the first quick charging battery 12 becomes almost zero, the controller 16 connects the second quick charging battery 13 and the high-capacity battery 14 in series, and adds the power of the high-capacity battery 14 to the power of the second quick charging battery 13 before outputting the resultant power.

## Description

### TECHNICAL FIELD

The present invention relates to a quick charging device that charges a battery for power mounted on an electric vehicle, for example, and to a mobile charging apparatus having the quick charging device mounted on a vehicle.

### BACKGROUND ART

As countermeasures against depletion of oil resources and global warming, electric vehicles using electric energy as the drive source have become available on the market in recent years, and there is a demand for quick charging devices that can charge electric vehicles in almost the same period of time as the period of time required for filling the gas tanks of conventional automobiles.
The following charging device has been suggested as a device that can perform quick charging, for example. A high-capacity battery for the facility is prepared. While an electric vehicle is not being charged, the battery is charged with a low current over a long period of time. When the battery for power of the electric vehicle is charged, a high current is discharged from the battery for the facility (see Patent Document 1, for example).

### Citation List

### Patent Document

Patent Document 1: JP 5-207668 A (pages 4 and 5, Fig. 1)

### DISCLOSURE OF THE INVENTION

### PROBLEMS TO BE SOLVED BY THE INVENTION

In the above-described conventional charging device, high DC power is obtained from the battery for the facility, and quick discharging the battery for power of the electric vehicle is performed. However, the control operation is complicated, and quick charging batteries are expensive.
The present invention has been made to solve the above mentioned problems, and the object thereof is to provide a quick charging device and a mobile charging apparatus that facilitate the control operation to be performed to charge the battery for power of an electric vehicle, and can achieve small sizes and reduce the cost even if quick charging batteries are used.

### MEANS TO SOLVE THE PROBLEMS

A quick charging device according to the present invention includes a battery that is capable of quickly charging a battery for power, the battery for power being a load; a high-capacity battery having a higher electrical capacitance than the battery; and a controller that, when the battery for power is charged, connects the battery and the high-capacity battery in series to add the power of the high-capacity battery to the power of the battery and supply the battery for power with the power obtained through the addition.

### EFFECTS OF THE INVENTION

In the present invention, when a battery for power is charged, a battery and a high-capacity battery are connected in series, and the power of the high-capacity battery is added to the power of the battery before supplied to the battery for power. Accordingly, the control operation to be performed when the battery for power is charged becomes easier. Also, when the battery for power is charged, the power of the battery is added to the power of the high-capacity battery, as described above. Accordingly, quick charging storage batteries with lower electrical capacitances can be used, and a less costly quick charging device can be provided.

### BRIEF DESCRIPTION OF THE DRAWINGS

FIG. 1 is a circuit diagram schematically illustrating the structure of a quick charging device according to a first embodiment.
FIG. 2 is a circuit diagram illustrating a situation where the high-capacity battery is charged in the quick charging device of the first embodiment.
FIG. 3 is a circuit diagram illustrating a situation where the first quick charging battery is charged in the quick charging device of the first embodiment.
FIG. 4 is a circuit diagram illustrating a situation where the second quick charging battery is charged in the quick charging device of the first embodiment.
FIG. 5 is a circuit diagram illustrating a situation where the battery for power is charged via the buffering resistor in the quick charging device of the first embodiment.
FIG. 6 is a circuit diagram illustrating a situation where the battery for power is charged via the DC/DC converter in the quick charging device of the first embodiment.
FIG. 7 is a circuit diagram illustrating a situation where the battery for power is charged without intervention of the buffering resistor and the DC/DC converter in the quick charging device of the first embodiment.
FIG. 8 is a circuit diagram illustrating a situation where the battery for power is charged by switching from the first quick charging battery to the second quick charging battery in the quick charging device of the first embodiment.
FIGS. 9(a) and 9(b) are graphs illustrating voltage and current curves representing the discharging characteristics in the quick charging device of the first embodiment.
FIG. 10 is a circuit diagram illustrating a situation where the first quick charging battery is charged by using the high-capacity battery in the quick charging device of the first embodiment.
FIG. 11 is a circuit diagram illustrating a situation where the second quick charging battery is charged by using the high-capacity battery in the quick charging device of the first embodiment.
FIG. 12 is a circuit diagram illustrating a situation where the first quick charging battery is charged while the battery for power is charged by using the second quick charging battery and the high-capacity battery in a quick charging device of a second embodiment.
FIG. 13 is a schematic view of a mobile charging apparatus in which the quick charging device of the first embodiment is mounted on a vehicle.

### DESCRIPTION OF THE EMBODIMENTS

### First Embodiment

This embodiment aims to quickly charging a vehicle or the like by storing mainly inexpensive nighttime power in a battery provided in this device.

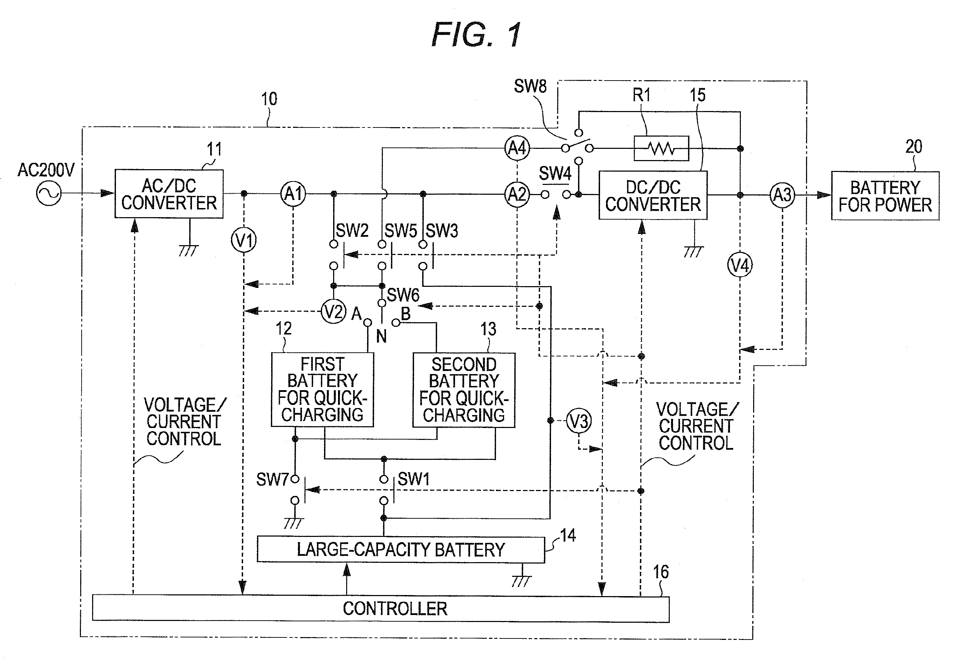

FIG. 1 is a circuit diagram schematically illustrating the structure of a quick charging device according to a first embodiment.
The quick charging device 10 illustrated in the drawing is a device for quickly charging an on-board battery for power 20 in an electric vehicle, for example. The quick charging device 10 includes: an AC/DC converter 11 that is connected to a commercial AC power supply of 200 V, for example; first and second quick charging batteries 12 and 13 (batteries) that have high charging and discharging rates; a high-capacity battery 14 that has a higher electrical capacitance than the first and second quick charging batteries 12 and 13, but has lower charging and discharging rates; a DC/DC converter 15 connected to the AC/DC converter 11; a controller 16 that controls the AC/DC converter 11 and the DC/DC converter 15; switches SW1 through SW8 for switching current flows in this device 10; a buffering resistor R1 inserted between the switch SW8 and the output terminal of the DC/DC converter 15; and voltmeters V1 through V4 and ammeters A1 through A4 for measuring voltage and current in this device 10. The above-described buffering resistor R1 is a resistor for restraining excess current flowing due to a potential difference from this device 10 when charging the battery for power 20.

The AC/DC converter 11 has a function to convert an AC voltage to a direct current, and increase or decrease the output in accordance with an instruction from the controller 16. The DC/DC converter 15 has a function to increase or decrease a direct current in accordance with an instruction from the controller 16. The first and second quick charging batteries 12 and 13, and the high-capacity battery 14 are lithium-ion batteries, for example. Alternatively, the first and second quick charging batteries 12 and 13 may be electrical double layer capacitors with high charging and discharging rates for example. The controller 16 controls opening and closing of each of the switches SW1 through SW8, based on measurement information obtained by the voltmeters V1 through V4 and the ammeters A1 through A4, and a CAN communication that is input when the battery for power 20 of the electric vehicle is connected to the device. The controller 16 also controls voltage and current in the AC/AC converter 11, and voltage and current in the DC/DC converter 15, as described above.

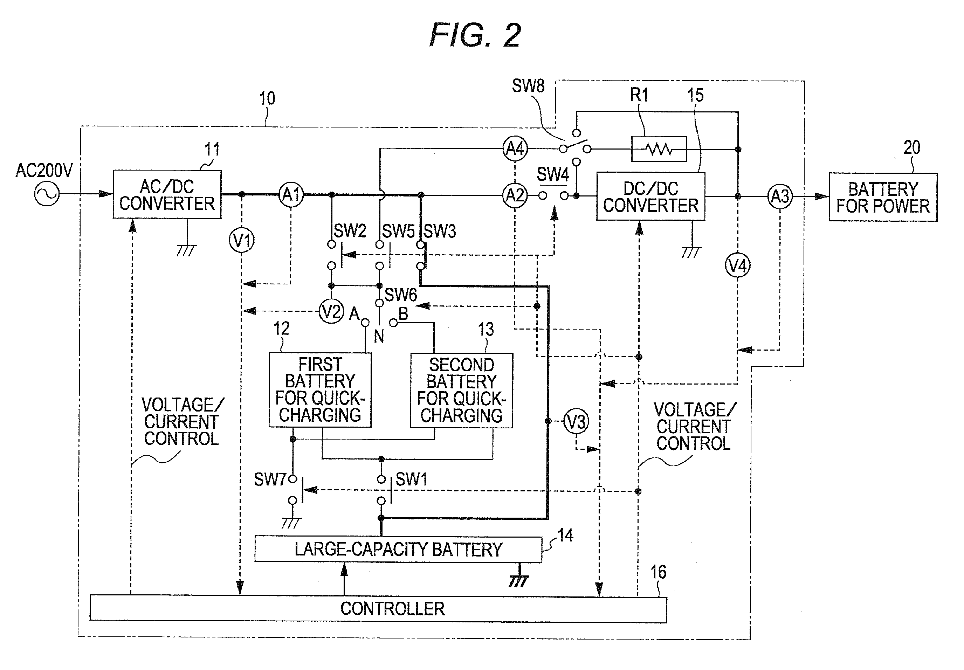

Referring now to FIGS. 2 through 11, operations of the quick charging device 10 having the above-described structure are described. Referring first to FIGS. 2 through 4, operations to be performed to charge the first and second quick charging batteries 12 and 13, and the high-capacity battery 14 are described.
Sensing the nighttime during which the electricity prices are low with a timer function thereof, the controller 16 determines whether the remaining power of the high-capacity battery 14 is full by measuring the terminal voltage or the like. If the controller 16 determines that the remaining power is not full, the controller 16 connects the AC/DC converter 11 to the high-capacity battery 14, as indicated by the solid heavy lines in FIG. 2, and then controls (the voltage of) the AC/DC converter 11 to charge the high-capacity battery 14. In that case, the charging is performed by a method suitable for the battery used as the high-capacity battery 14, such as a constant-voltage constant-current method. The charging control based on the remaining power of the battery is performed by the controller 16. Since the high-capacity battery 14 has a high capacity, the charging is performed over a long period of time, such as an overnight period.

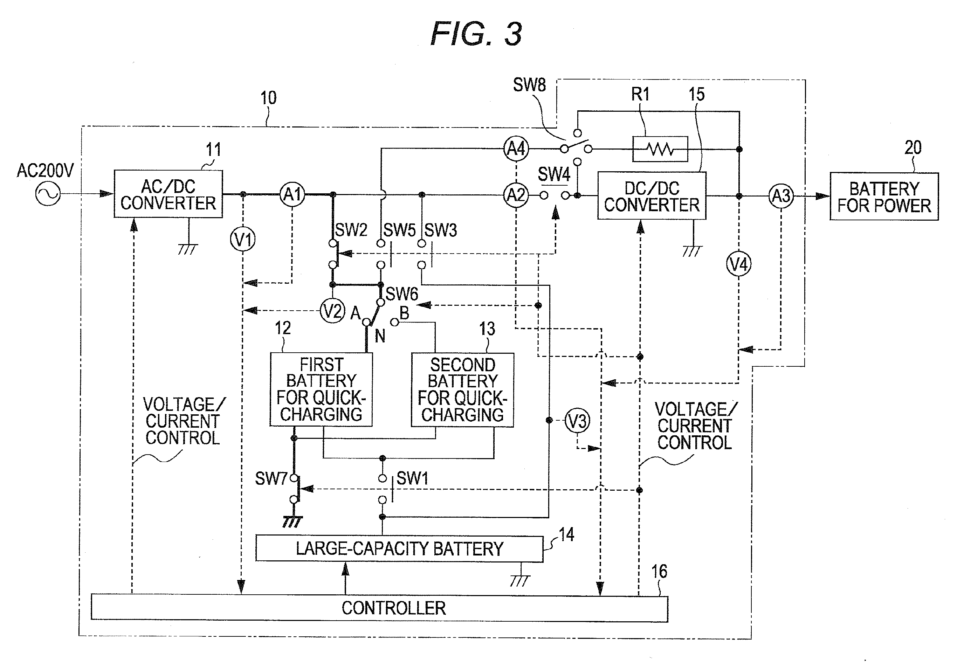

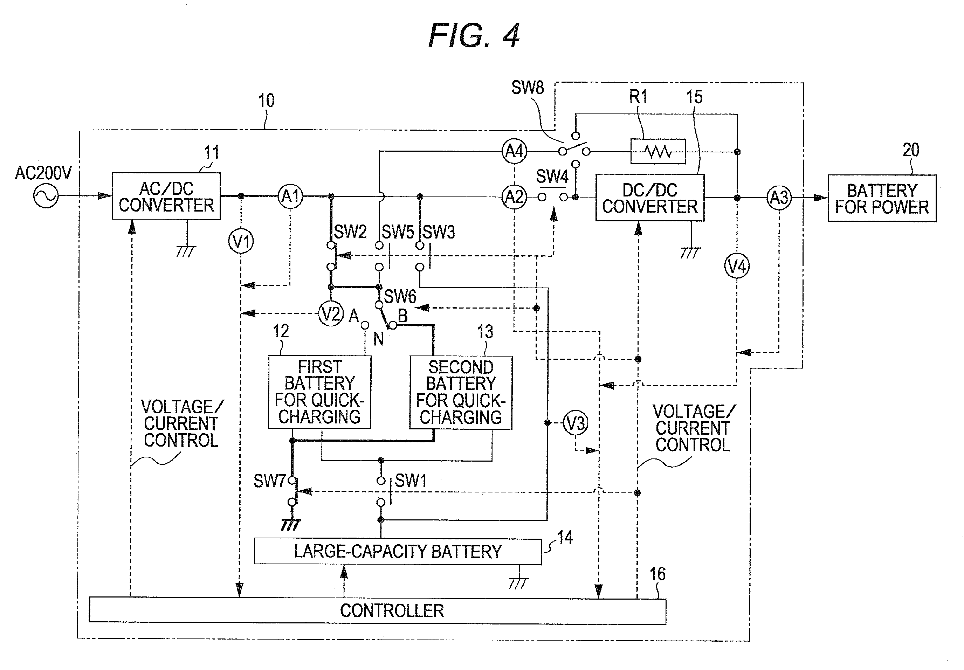

After finishing the charging of the high-capacity battery 14, the controller 16 measures the remaining power of the first quick charging battery 12 in the same manner as above. If the controller 16 determines that the remaining power is not full, charging is performed in the following manner.
As indicated by the solid heavy lines in FIG. 3, the controller 16 connects the AC/DC converter 11 to the first quick charging battery 12, and then controls the AC/DC converter 11 so that charging is performed at a voltage and with a current suitable for the first quick charging battery 12. The charging of the first quick charging battery 12 is completed in a shorter period of time than the charging of the high-capacity battery 14, such as several minutes to one hour. After finishing the charging of the first quick charging battery 12, the controller 16 determines the remaining power of the second quick charging battery 13. If the controller 16 determines that charging is necessary, the controller 16 connects the output terminal of the AC/DC converter 11 to the second quick charging battery 13 by switching the switch SW6, as indicated by the solid heavy lines in FIG. 4, to charge the second quick charging battery 13.

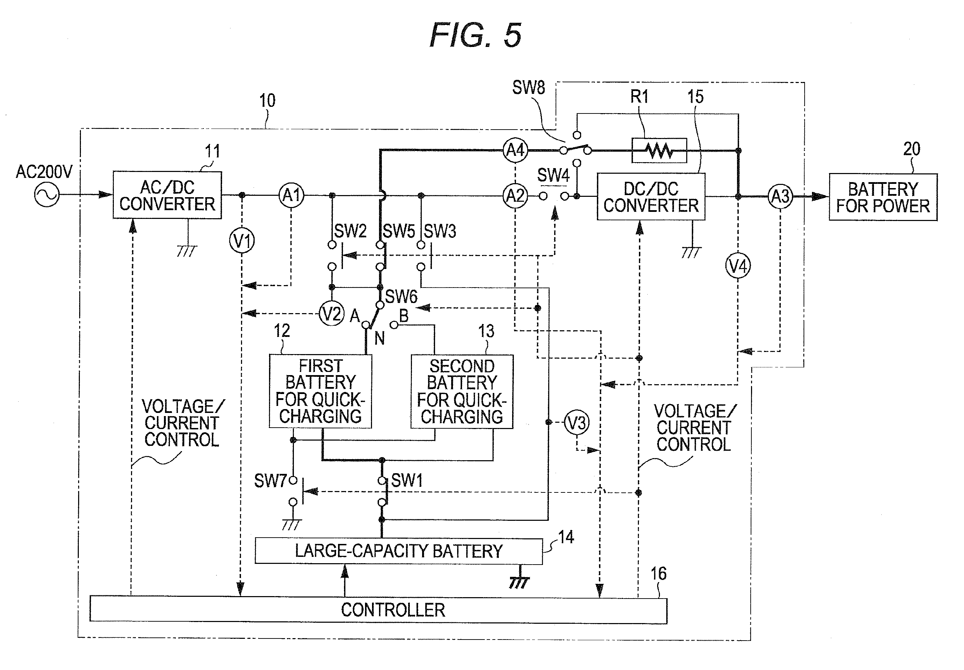

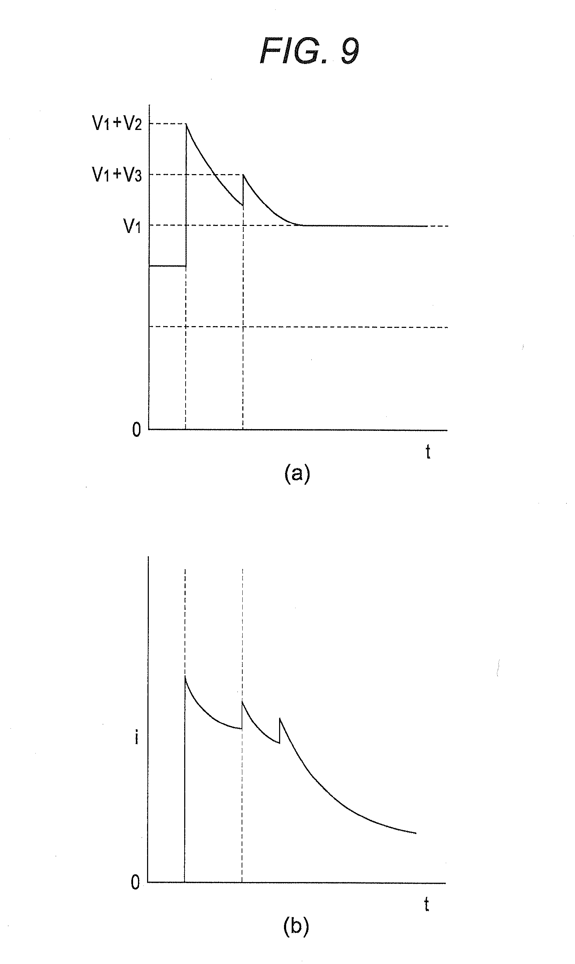

Referring now to FIGS. 5 through 9, operations to be performed to charge the battery for power 20 are described.
After finishing the charging of the first and second quick charging batteries 12 and 13 and the high-capacity battery 14, the controller 16 determines that the battery for power 20 of an electric vehicle is connected to this device 10, when sensing receipt of a CAN communication from the electric vehicle. The controller 16 then reads the power (voltage and current) necessary for the battery for power 20 from the CAN communication, and starts the charging. First, as indicated by the solid heavy lines in FIG. 5, the controller 16 connects the first quick charging battery 12 and the high-capacity battery 14 in series, and connects the switch SW8 to the buffering resistor R1, to charge the battery for power 20. Where V1 represents the voltage of the high-capacity battery 14, and V2 (< V1) represents the voltage of the first quick charging battery 12, a voltage of V1 + V2 is supplied to the battery for power 20 as shown in FIG. 9(a), and the voltage becomes gradually lower as the charging progresses.
Since the battery for power 20 is charged by using only two batteries in this case, a high-efficiency, stable charging operation can be performed.

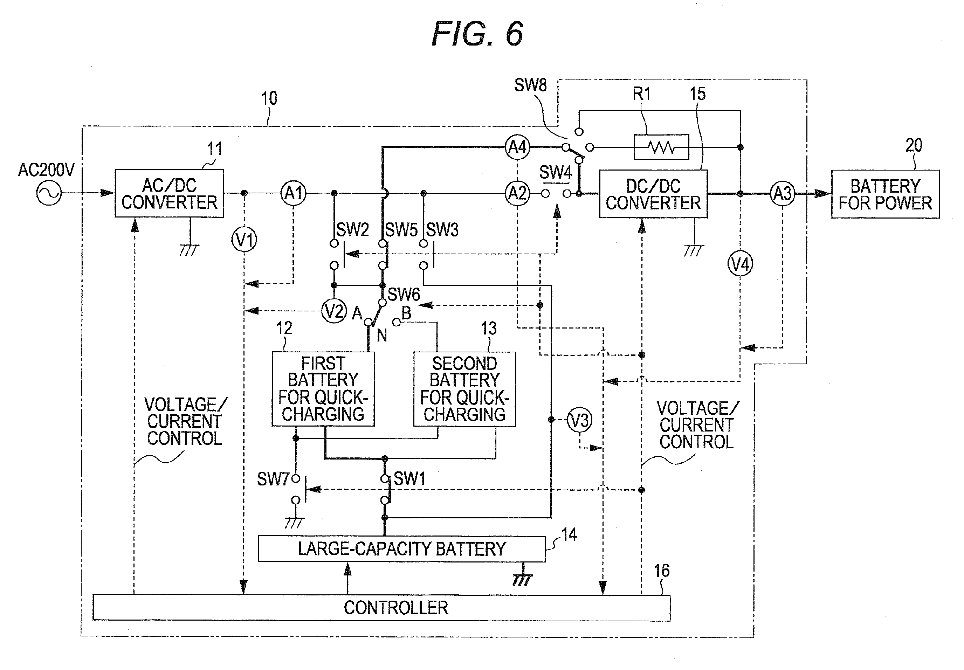

In a case where charging cannot be performed via the buffering resistor R1 for the reason that the total voltage of the high-capacity battery 14 and the first quick charging battery 12 greatly differs from the voltage of the battery for power 20, for example, the controller 16 connects the switch SW8 to the input side of the DC/DC converter 15, and inputs the total voltage of the high-capacity battery 14 and the first quick charging battery 12 to the DC/DC converter 15, as shown in FIG. 6. The controller 16 then controls the DC/DC converter 15 to provide a current or voltage necessary for charging the battery for power 20, and charges the battery for power 20.
Since the first quick charging battery 12 and the high-capacity battery 14 are also connected in series in this case, the voltage to be adjusted by the DC/DC converter 15 in charging the battery for power 20 is a low voltage. Accordingly, the loss in the DC/DC converter 15 becomes smaller.

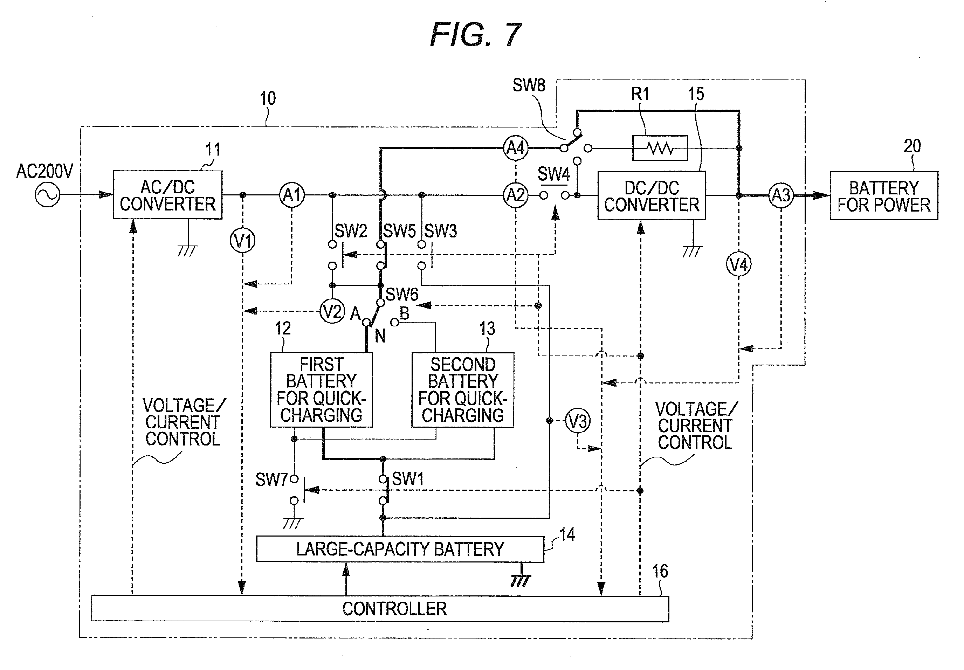

Depending on the characteristics and voltage of the battery for power 20 and the voltage conditions of the high-capacity battery 14 and the first or second quick charging battery, the controller 16 connects the switch SW8 to the output side of the DC/DC converter 15, and directly charges the battery for power 20 without the intervention of the buffering resistor R1 and the DC/DC converter 15, as shown in FIG. 7.

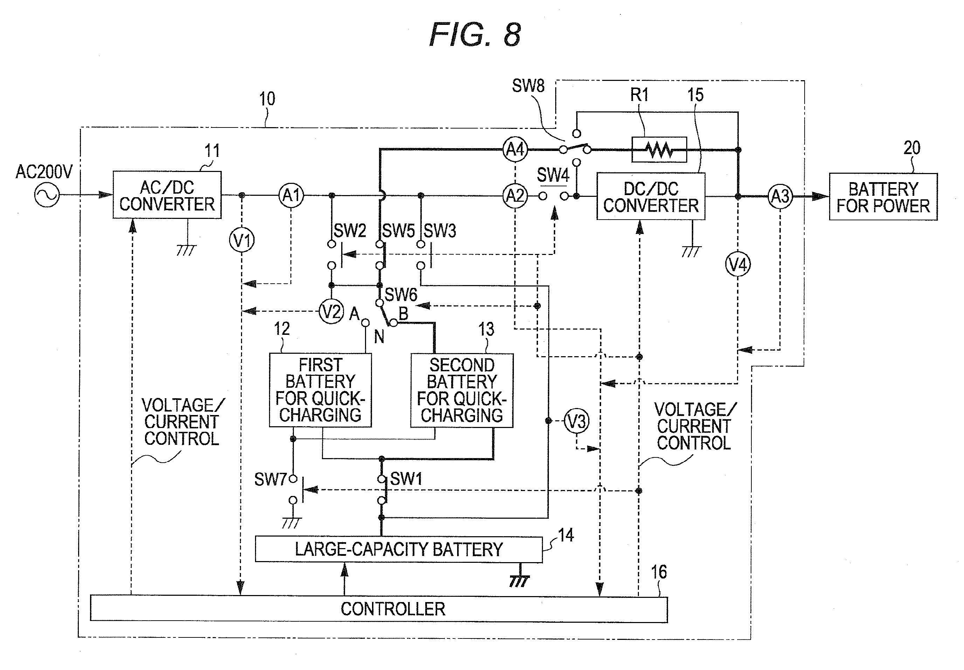

When the power of the first quick charging battery 12 becomes equal to or lower than the power necessary for charging while the battery for power 20 is repeatedly charged, or when the voltage V2 of the battery 12 becomes also zero after time t has passed, the controller 16 disconnects the first quick charging battery 12 from the high-capacity battery 14, and connects the second quick charging battery 13, which is the next battery, to the high-capacity battery 14, as indicated by solid heavy lines in FIG. 8. The controller 16 then adds the voltage V3 of the second quick charging battery 13 to the voltage V1 of the high-capacity battery 14, and charges the battery for power 20 in the same manner as in the above-described case where the first quick charging battery 12 is used.
In this case, depending on the voltage difference from the battery for power 20 due to the connection between the first or second quick charging battery 12 or 13 and the high-capacity battery 14, the characteristics of the battery for power 20, and the like, the switch SW8 can be switched to a connection to the buffering resistor R1, a connection to the DC/DC converter 15, or a direction connection, as in FIGS. 5 through 7.
FIG. 9 (a) shows the temporal change in the charging voltage in this case. As the voltage of the first quick charging battery 12 drops, the charging voltage temporarily becomes lower, but the voltage again increases to resume the charging when the connection of the voltage V1 is switched to the voltage V3 of the second quick charging battery 13. FIG. 9(a) shows an example case where the voltage V3 of the second quick charging battery 13 is lower than the voltage V1.

Further, in a case where the controller 16 senses that, while the battery for power 20 is repeatedly charged, the voltage V3 of the second quick charging battery 13 has become almost zero after the time t has passed as in the above-described case, the controller 16 turns off the switch SW6 (N) as well as the switches SW1 and SW5, and turns on the switches SW3 and SW4 (the current path of this case is not shown). The controller 16 then controls the DC/DC converter 15, so that the voltage V1 of the high-capacity battery 14 is supplied directly to the battery for power 20 via the DC/DC converter 15.
In this case, the voltage V1 of the high-capacity battery 14 becomes almost constant as shown in FIG. 9 (a) , and is supplied to the battery for power 20 via the DC/DC converter 15. The current i at the time of this charging is shown in FIG. 9(b). That is, before the electrical capacitances of the first and second quick charging batteries 12 and 13 become almost zero, the battery for power 20 is charged by using the first quick charging battery 12 and the high-capacity battery 14, or using the second quick charging battery 13 and the high-capacity battery 14. When the remaining power of each of the first and second quick charging batteries 12 and 13 becomes zero, the current required by the battery for power 20 is supplied by using only the high-capacity battery 14, and the charging can be continued.

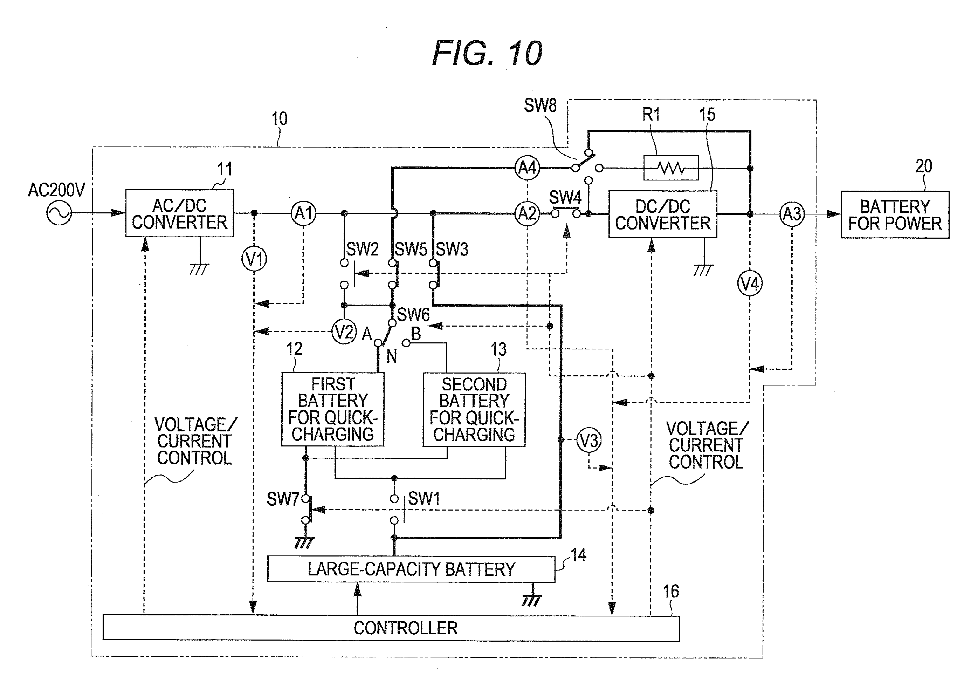

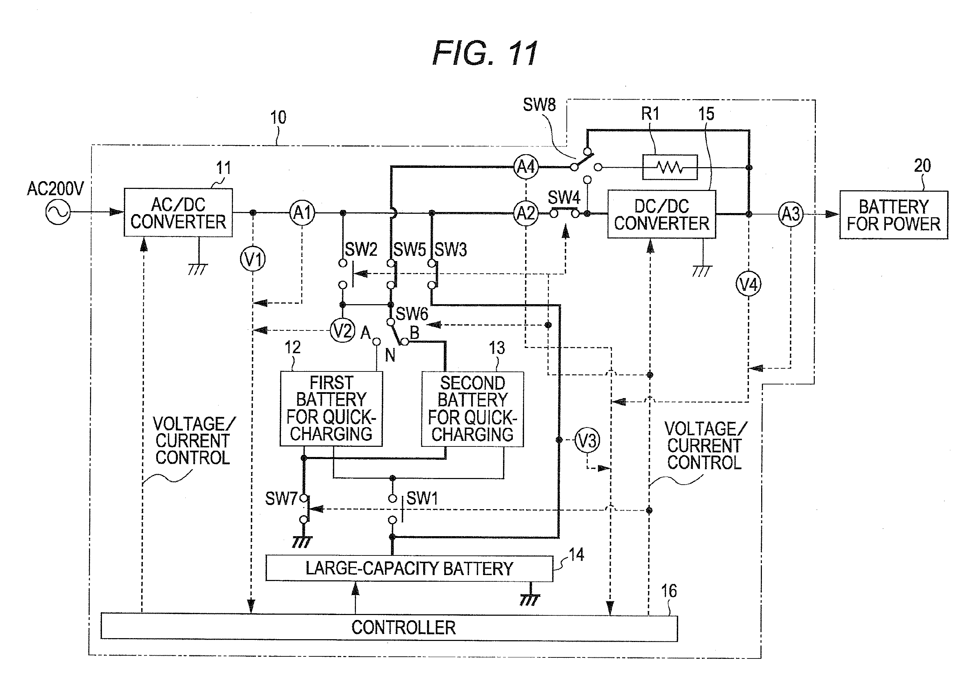

The following is a description of operations to be performed to auxiliarily charge the first and second quick charging batteries 12 and 13 by using the high-capacity battery 20 in a case where the remaining power of each of the first and second quick charging batteries has become zero, and the battery for power 20 is not connected to the device, with reference to FIGS. 10 and 11.
After finishing the charging of the battery for power 20, the controller 16 charges the first and second quick charging batteries 12 and 13 by using the power of the high-capacity battery 14 in the following manner.
First, as indicated by the solid heavy lines in FIG. 10, the controller 16 connects the switch SW8 to the output side of the DC/DC converter 15, and connects the high-capacity battery 14 to the first quick charging battery 12 via the DC/DC converter 15. The controller 16 then controls the DC/DC converter 15, so that the power (voltage and current) necessary for charging the first quick charging battery 12 is supplied from the high-capacity battery 14 with an appropriate current and at an appropriate voltage.
When the first quick charging battery 12 is fully charged through this control, the controller 16 switches the connection of the high-capacity battery 14 to the second quick charging battery 13 as indicated by the solid heavy lines in FIG. 11, and controls the DC/DC converter 15, so that the power (voltage and current) necessary for charging the second quick charging battery 13 is supplied from the high-capacity battery 14.
In this manner, the charging operations described with reference to FIGS. 5 through 8 can be again performed. This is because the electrical capacitances of the first and second quick charging batteries 12 and 13 are lower than that of the high-capacity battery 14.

In a case where the electrical capacitance of the high-capacity battery 14 drops to a predetermined amount while the charging and discharging illustrated in FIGS. 5 through 11 are repeated, the controller 16 charges the high-capacity battery 14 in the manner illustrated in FIG. 2. If this situation occurs in the daytime, charging is performed without the use of the nighttime power, to prepare for the next charging operation for the battery for power 20.

As described above, in the first embodiment, the battery for power 20 is charged by connecting the high-capacity battery 14 and the first quick charging battery 12 in series when the battery for power 20 of an electric vehicle is charged. When the electrical capacitance of the first quick charging battery 12 becomes almost zero due to the charging, the battery for power 20 is charged by connecting the high-capacity battery 14 and the second quick charging battery 13 in series. Further, when the electrical capacitance of the second quick charging battery 13 becomes almost zero, the battery for power 20 is charged by using only the high-capacity battery 14.

Accordingly, the control operation to be performed to charge the battery for power 20 of an electric vehicle becomes easier, and efficient charging can be performed with a smaller power loss. Also, when the battery for power 20 is charged, the power of the high-capacity battery 14 is added to the power of the first quick charging battery 12. Accordingly, quick charging batteries with lower electrical capacitances can be used, and a less costly quick charging device 10 can be provided.

### Second Embodiment

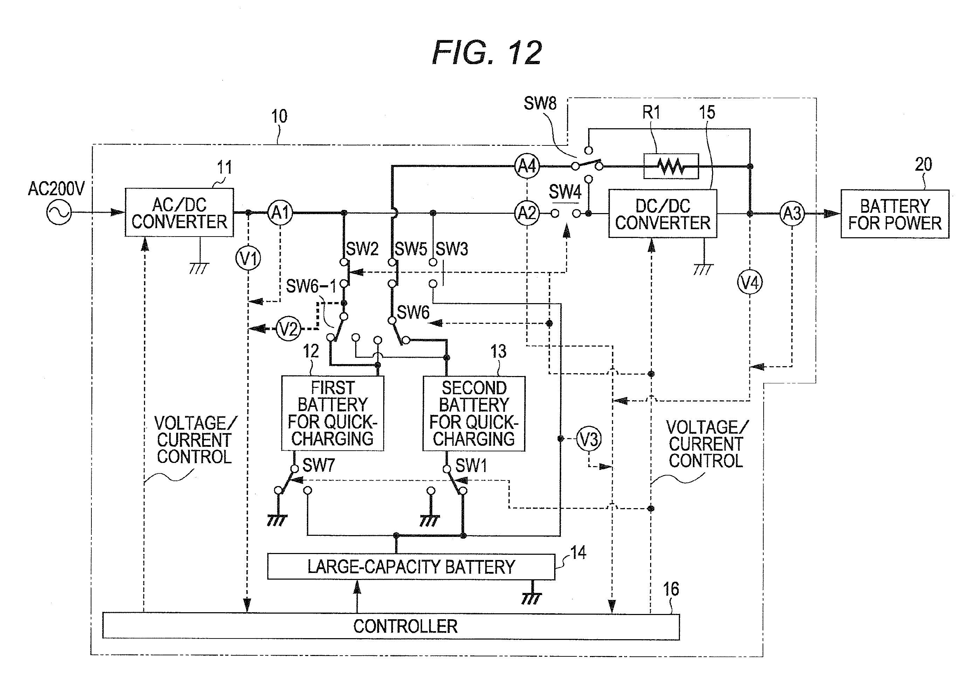

Referring now to FIG. 12, a second embodiment is described.
FIG. 12 is a circuit diagram illustrating a situation where a first quick charging battery is charged in a quick charging device of the second embodiment, and a battery for power is charged by using a second quick charging battery and a high-capacity battery.
In the above-described first embodiment, the quick charging device 10 that stores mainly the nighttime power into the high-capacity battery 20 has been described. When the remaining power of the first quick charging battery 12 becomes almost zero, the battery for power 20 can be continued to be charged by connecting the second quick charging battery 13 in series to the high-capacity battery 20, but the first quick charging battery 12 having no remaining power can be auxiliarily charged only when the battery for power 20 is not connected to the device.

In view of this, in a case where the remaining power of a first quick charging battery 12 becomes almost zero in the second embodiment, auxiliary charging is performed on the first quick charging battery 12 by using a AC/DC converter 11 at the same time as when a battery for power 20 is charged by connecting a second quick charging battery 13 and a high-capacity battery 20 in series.

In the first embodiment, the switch SW6 is used to switch connections of the first and second quick charging batteries 12 and 13 to the AC/DC converter 11 and to the DC/DC converter 15, as shown in FIG. 1. In the second embodiment, on the other hand, two select switches SW6 and SW6-1 are used to switch connections at the corresponding portions, as shown in FIG. 12.

In a case where the remaining power of the first quick charging battery 12 is almost zero, and the battery for power 20 is quickly charged by using the second quick charging battery 13 and the high-capacity battery 20 as shown in FIG. 8, for example, the first quick charging battery 12 having almost no power can do nothing but stand by in the first embodiment. In the second embodiment having the above-described structure, however, the AC/DC converter 11 and the first quick charging battery 12 are connected in series by switching the select switch SW6-1, and auxiliary charging is performed on the first quick charging battery 12 by using the AC/DC converter 11, while the battery for power 20 is quickly charged by using the second quick charging battery 13 and the high-capacity battery 20, as shown in FIG. 12. In a case where the battery for power 20 is connected to this device 10 while the remaining power of the second quick charging battery 13 is almost zero, on the other hand, the battery for power 20 is quickly charged by using the first quick charging battery 12 and the high-capacity battery 20, and auxiliary charging can be performed on the second quick charging battery 13 by using the AC/DC converter 11.

In this case, daytime power is used, instead of nighttime power. However, the charging power is smaller than that for the high-capacity battery 14, since the capacity of each of the quick charging batteries 12 and 13 is low. Accordingly, increases in electricity fees can be prevented, even if charging is performed by using daytime power.
In the second embodiment, the respective operations illustrated in FIGS. 2 through 8 can also be performed as in the first embodiment.

In the above-described second embodiment, in a case where the remaining power of the first quick charging battery 12 becomes almost zero, auxiliary charging can be performed on the first quick charging battery 12 by using the AC/DC converter 11 at the same time as when the battery for power 20 is quickly charged by using the second quick charging battery 13 and the high-capacity battery 14. Accordingly, the battery for power 20 can be charged in a more continuous manner.

Although two quick charging batteries are used in the first and second embodiments, it is also possible to use one quick charging battery, or three or more quick charging batteries. Also, quick charging batteries having different electrical capacitances and different characteristics from each other may be used as the first and second quick charging batteries 12 and 13.

In the first and second embodiments, an auxiliary power source (such as solar power, solar thermal power, wind-generated power, and geothermal power) may be provided as well as a commercial power source, and be connected in parallel to the first and second quick charging batteries 12 and 13 in this device 10 for power feeding. In this manner, the amount of power received from the commercial power source can be reduced. In this case, power is supplied to the respective batteries 12 and 13 after converted into a direct current in a system that generates an alternating current, such as a wind power generator. In a system that generates a direct current, such as a solar power generator, power is supplied to the respective batteries 12 and 13 after converted into a voltage.

Although the power source for the quick charging device 10 is a commercial power source in the first and second embodiments, the power source is not limited to that, and may be any power supply unit that generates AC power, such as a private electric power generator.

### Third Embodiment

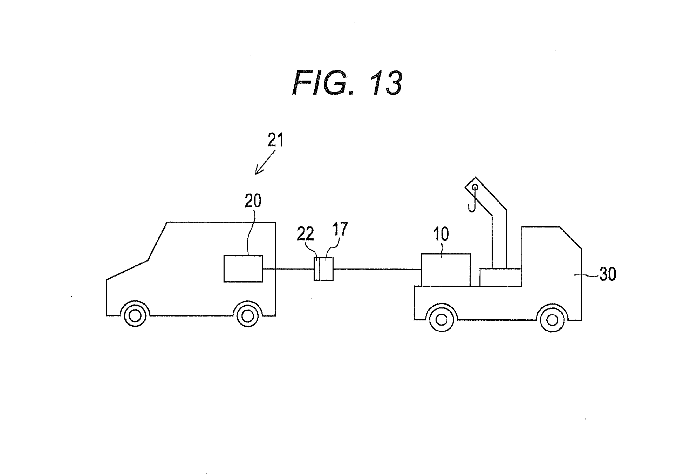

FIG. 13 is a schematic view of a mobile charging apparatus in which the quick charging device of the first embodiment is mounted on a vehicle.
In the mobile charging apparatus of the third embodiment, the quick charging device 10 described in First Embodiment is mounted on a vehicle 30, as shown in FIG. 13. This quick charging device 10 does not require an input of AC power to charge the battery for power 20. Therefore, when there is a call from an electric vehicle 21 that has exhausted the battery for power 20 on the road and become unable to move, the above-mentioned vehicle 30 goes to the site, and charges the battery for power 20 of the electric vehicle 21 in a short period of time by connecting a connector 17 for quick charging and a connector 22 of the electric vehicle 21 on the road.
This mobile charging apparatus can be charged beforehand on the vehicle, and then stand by. Accordingly, the electric vehicle 21 that has become unable to move on the road can be moved to a nearby power feeding station as an emergency measure, and the power necessary for returning home can be supplied in a short period of time.

### DESCRIPTION OF REFERENCE SIGNS

10: Quick charging device, 11: AC/DC converter, 12: First quick charging battery, 13: Second quick charging battery, 14: High-capacity battery, 15: DC/DC converter, 16: Controller, 17: Connector for quick charging, 20: Battery for power, 21: Electric vehicle, 22: Connector, 30: Vehicle

## Claims

1. A quick charging device comprising:
a battery capable of quickly charging a battery for power, the battery for power being a load;
a high-capacity battery having a higher electrical capacitance than the battery; and
a controller configured to, when the battery for power is charged, connect the battery and the high-capacity battery in series to add power of the high-capacity battery to power of the battery, and supply the battery for power with the power obtained through the addition.

2. The quick charging device according to claim 1, comprising a DC/DC converter connected to the battery for power,
wherein, when the power of the battery becomes equal to or lower than power necessary for charging while the battery for power is being charged with the power obtained through the addition, the controller controls the DC/DC converter to supply only the power of the high-capacity battery to the battery for power via the DC/DC converter.

3. The quick charging device according to claim 1 or 2, comprising a plurality of the batteries,
wherein when the power of the battery connected in series to the high-capacity battery becomes equal to or lower than the power necessary for charging due to the charging of the battery for power, the controller connects a next battery and the high-capacity battery in series.

4. The quick charging device according to any one of claims 1 to 3, comprising an AC/DC converter connected to an alternating-current power source,
wherein, when the battery for power is charged by connecting the next battery and the high-capacity battery in series, the controller connects the AC/DC converter to the battery having power equal to or lower than the power necessary for charging, and controls the AC/DC converter to supply power to the battery.

5. The quick charging device according to any one of claims 2 to 4, wherein, when the battery for power is not charged, the controller controls the DC/DC converter to charge the battery with the power of the high-capacity battery via the DC/DC converter.

6. The quick charging device according to any one of claims 1 to 5, comprising a buffering resistor for restraining excess current, the buffering resistor being connected to the battery for power,
wherein, when the battery for power is charged with the power obtained through the addition, the controller supplies the power to the battery for power via the buffering resistor.

7. The quick charging device according to any one of claims 2 to 6, wherein, when the battery for power is charged with the power obtained through the addition, the controller controls the DC/DC converter to supply the power to the battery for power via the DC/DC converter.

8. The quick charging device according to any one of claims 4 to 7, wherein, when the battery for power is not charged, the controller controls the AC/DC converter to supply power from the AC/DC converter to the high-capacity battery.

9. The quick charging device according to any one of claims 4 to 8, wherein, when the battery for power is not charged, the controller controls the AC/DC converter to supply power from the AC/DC converter to the battery.

10. A mobile charging apparatus comprising the quick charging device according to any one of claims 1 to 9, the quick charging device being mounted on a vehicle.
